# EUROPEAN PATENT APPLICATION

(11) **EP 1 635 556 A2**
(43) Date of publication of application: **15.03.2006**
(21) Application number: 05255107.4
(22) Date of filing: 18.08.2005
(51) Int. Cl.: H04N 5/232

(54) **Camera system, camera body, and camera head**

(30) Priority: 09.09.2004 JP 2004262197
(71) Applicant: FUJI PHOTO FILM CO., LTD., Minamiashigara-shi, Kanagawa-ken 250-0193 (JP)
(72) Inventor: Tanaka, Hiroshi c/o Fuji Photo Film Co., Ltd., Asaka-shi, Saitama 351-8585 (JP)
(74) Representative: Stevens, Jason Paul

(57) **Abstract**

A camera system 1 (comprising a camera body 1b and a camera head 1a) prevents an unfit camera head from being attached to the camera body, and accordingly prevents inadequate photographing from being performed.

The camera head 1a is provided with a wireless tag 102a, and the camera body 1b is provided with a wireless tag reader/writer 160b which receives type information from the wireless tag 102a. When the camera head 1a is about to be attached to the camera body 1b, if it is judged that the camera head 1a is fit for the camera body 1b on the basis of the type information transmitted wirelessly from the camera head 1a to the camera body 1b, a mount cover 15b is put into an "open" state.

## Description

### BACKGROUND OF THE INVENTION

### 1. Field of the invention

The present invention relates to a camera system having a camera head, which includes a photographic optical system and an image pickup element, and a camera body, which the camera head is attachable to and detachable from, and which receives image signals from the attached camera head and thus processes the signals, as well as a camera body and a camera head constituting the camera system.

### 2. Description of the Related Art.

A camera system has been proposed, in which information concerning a plug-in unit with an image pickup element and a photographic optical system integrated therein is transferred to a camera body when the plug-in unit is attached to the camera body, and thus it is made possible to take a photograph by use of the photographic optical system included in the plug-in unit (see Japanese Patent Laid-open Official Gazette No. Hei. 8-172561). Realization of a camera system in which photographic optical systems, i.e. photographic lenses, are changed only by attaching the plug-in unit to the camera head in this manner has made it very easy to handle the camera system, and accordingly has made it possible for even a person without professional knowledge to change photographic lenses easily.

Among similar camera systems, there has been a camera system including a camera head, which includes a photographic optical system and an image pickup element, and a camera body, which the camera head is attachable to and detachable from, and which receives image signals from the attached camera head and thus processes the signals (see Japanese Patent Laid-open Official Gazette No. 2000-187268, for example).

On the other hand, image pickup elements of various types have been introduced into the market, and properties of the image pickup elements are diverse. This causes a situation in which, if a camera head installed with any one of the image pickup elements of various types is intended to be attached to a camera body, the properties of the image pickup element cannot be identified by the camera body until the camera head is attached to the camera body.

Against that background, in the case of such a camera system, techniques have been proposed, in which, after a camera head is attached to the camera body, the camera body determines whether or not the attached camera head is fit for the camera body, and in which thereby, if the camera body judges that the camera head is not fit for the camera body, restrictions are imposed on photographing operations, and a warning is issued (see Japanese Patent Laid-open Official Gazettes No. Hei. 11-183785, No. 2001-16498, No. 2003-228114, and No. 2003-228115; hereinafter referred to as "Patent Literatures 3 to 6").

However, even if the techniques described in Patent Literatures 3 to 6 are fully employed, it is not known whether or not a camera head is fit for the camera body, until the camera head is attached to the camera body.

For this reason, in many cases, a user checks with a user's manual on whether or not a camera head, which is intended to be attached to the camera body, is fit for a camera body, before the user attaches the camera head to the camera body. In a case where a user skips the check with the user's manual, even if a warning based on the aforementioned techniques is issued to the user when the user has attached to a camera body a camera head which is not fit for the camera body, the user may take a picture without being unaware of the warning. Only later does the user know about the unsuccessful photographing.

### SUMMARY OF THE INVENTION

The present invention has been made in view of the above circumstances, and provides a camera system, a camera body and a camera head, which prevent a camera head unfit for a camera body from being attached to the camera body, and which accordingly prevent an inadequate photographing from being performed.

The camera system according to the present invention includes a camera head, which has a photographic optical system and an image pickup element, as well as a camera body, which the camera head is attachable to and detachable from, and which thereby receives image signals from the attached camera head, thus processing the signals,
wherein the camera head includes a contactless near-field transmission section, which beforehand stores type information for identifying the type of the camera head, and which transmits the type information wirelessly, and
wherein the camera body includes:
a mount section, which the camera head is attached onto, and which includes a mount cover and an opening-and-closing drive section, the mount cover enabling the camera head to be attached to the camera body while the mount cover is being put in an "open" state, and making it unable for the camera head to be attached to the camera body while the mount cover is being put in a "closed" state, the opening-and-closing drive section opening and closing the mount cover;
a contactless near-field reception section which receives the type information transmitted from the contactless near-field transmission section;
a fitness determination section which determines whether or not the camera head, whose type is identified by the type information received by the contactless near-field reception section, is fit for the camera body; and
an opening-and-closing control section which receives the judgment made by the fitness determination section that the camera head is fit for the camera body, and which thereby instructs the opening-and-closing drive section to open the mount cover.

In the case of the camera system according to the present invention, when the camera head is about to be attached to the mount section, the type information transmitted from the contactless near-field transmission section in the camera head is received by the contactless near-field reception section in the camera body, and thereby the fitness determination section determines whether or not the camera head is fit for the camera body. When the fitness determination section in the camera body judges that the camera head is fit for the camera body, the opening-and-closing control section instructs the opening-and-closing drive section to open the mount cover upon reception of the judgment. Accordingly, the mount cover is put into the "open" state, and the camera head is accepted. In addition, when the fitness determination section judges that the camera head is not fit for the camera body, the mount cover remains in the "closed" state, and the attachment of the camera head to the camera body is rejected.

In this manner, the camera system is realized which prevents an unfit camera head from being attached to the camera body, and which accordingly prevents an inadequate photographing from being performed.

It is preferable that the camera body which realizes this kind of camera system include:
a mount section, which the camera head is attachable onto and detachable from, and which includes a mount cover and an opening-and-closing drive section, the mount cover enabling the camera head to be attached to the camera body while the mount cover is being put in an "open" state, and making it unable for the camera head to be attached to the camera body while the mount cover is being put in a "closed" state, the opening-and-closing drive section opening and closing the mount cover;
a contactless near-field reception section which receives the type information transmitted from a contactless near-field transmission section of the camera head;
a fitness determination section which determines whether or not the camera head, whose type is identified by the type information received by the contactless near-field reception section, is fit for the camera body; and
an opening-and-closing control section which receives the judgment made by the fitness determination section that the camera head is fit for the camera body, and which thereby instructs the opening-and-closing drive section to open the mount cover.

In this respect, it is advantageous that the camera body include:
a proximity sensor which constantly monitors whether or not the camera head comes closer to the camera body; and
a power control section which turns power on in response to the proximity sensor's detection that the camera head has come closer to the camera body,

wherein the contactless near-field reception section starts to operate when the power control section turns power on.

In this manner, when the camera head comes closer to the camera body, the proximity sensor detects that the camera head has come closer to the camera body. In response to the detection, the power control section turns power on, and thereby the contactless near-field reception section starts to operate. Thus, the type information from the contactless near-field transmission section in the camera head is received by the contactless near-field reception section.

This makes power turned on in the contactless near-field transmission section in the camera head only when the camera head comes closer to the camera body, in other words, only when the camera body needs the type information from the contactless near-field transmission section. Accordingly, this keeps power consumption in the camera body low. In addition, even if a power source, for example, a battery is not disposed in the camera head, power can be supplied wirelessly from the camera body to the camera head as needed, thus enabling the contactless near-field transmission section in the camera head to operate.

Furthermore, it is advantageous that the type information be ID information specific to the camera head.

For example, if the camera body is provided with a storage section in which information associating ID information specific to the camera head and the type of the camera head is stored with regard to each of many camera heads, the fitness determination section in the camera body makes reference to the storage section when the specific ID information is transmitted from the camera head. This makes it possible to easily identify the type of the camera head corresponding to the ID information received by the contactless near-field reception section.

In some cases, however, if types of camera heads increase in number, when any one of the various camera heads is intended to be attached to the camera body, the ID information which is transmitted from the camera head may not have been stored in the storage in the camera body.

With this taken into consideration, it is advantageous that the type information be property information.

If the type information is property information, the contactless near-field reception section in the camera body receives the property information, which is the type information transmitted from the camera head which is about to be attached to the camera body, and which represents the properties of the camera head. Thereby, the fitness determination section determines whether or not the camera head is fit for the camera body, on the basis of the property information representing the properties of the camera head.

It is advantageous that the property information include any one of the number of bits of an A/D converter, information concerning an optical black, as well as the number of pixels, the pattern of the filter array, and the pixel array of the image pickup element.

In a case where the property information includes any one of the items and a signal processing section in the camera body needs any one of the items as a parameter, the fitness determination section determines whether or not the signal processing section in the camera body can perform signal processing.

It is advantageous that the camera head to be attached to the camera body be a camera head, which includes a photographic optical system and an image pickup element, and which is attachable to and detachable from a camera body to receive image signals and to thereby process the signals, and transmits the image signals to the camera body, and the camera head be in a form including:
a contactless near-field transmission section which beforehand stores type information for identifying the type of the camera head, and which transmits the type information wirelessly.

As described above, realized are the camera system, the camera body, and the camera head, which prevents an unfit camera head from being attached to the camera body, and which accordingly prevents an inadequate photographing from being performed.

### BRIEF DESCRIPTION OF THE DRAWINGS

Fig. 1 is a diagram showing camera heads of several types and a camera body to which any one of the camera heads of several types may be attached.
Fig. 2(a) is a diagram showing an appearance of the camera body shown in Fig. 1 and an appearance of the camera head 1a which is one of the camera heads shown in Fig. 1.
Fig. 2(b) is a diagram showing another appearance of the camera body shown in Fig. 1.
Fig. 3 is a block diagram showing a relationship among: what is termed as a contactless near-field transmission section in the present invention, which is disposed in the camera head 1a; what is termed as a contactless near-field reception section in the present invention, which is disposed in the camera body; and a main body CPU, which is not only what is termed as a mount cover opening-and-closing control section in the present invention but also what is termed as a fitness determination section in the present invention.
Fig. 4 is a diagram showing internal configurations respectively of a wireless tag 102a which is an example of the contactless near-field transmission section, and which is disposed in the camera head according to an embodiment of the present invention, as well as a wireless tag reader-writer, which is an example of the contactless near-field reception section 160b, and which is disposed in the camera body.
Fig. 5 is a diagram explaining processes which the main body CPU 100b carries out when the camera head 1a is intended to be attached to the camera body.
Fig. 6 is a diagram showing an example of ID information.
Fig. 7 is a diagram showing an internal configuration of a digital signal processing section shown in Fig. 3.
Fig. 8 is a diagram showing an example of property information.
Fig. 9 is a diagram explaining meanings respectively of symbols in the property information.
Fig. 10 is a diagram showing criteria based on the properties for determining whether or not signal processing can be performed in the digital signal processing section.
Fig. 11 is a diagram explaining procedure in which the main body CPU 100b controls the opening and the closing of a mount cover 15b.

### DETAILED DESCRIPTION OF THE INVENTION

Hereinafter, descriptions will be provided for embodiments of the present invention.

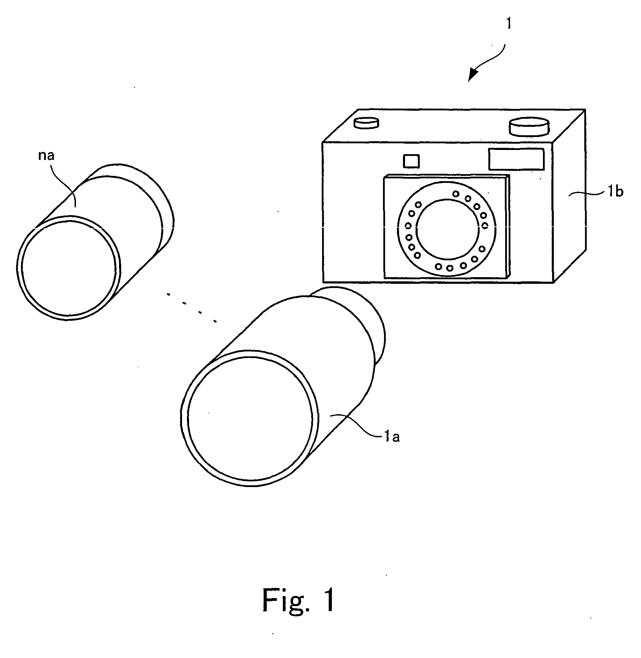

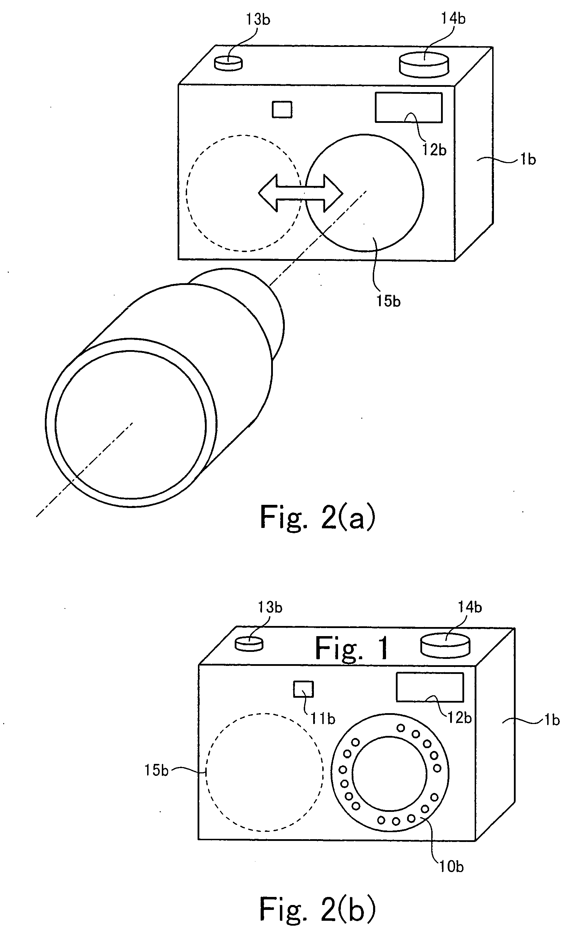

Fig. 1 is a diagram showing several types of camera heads and a camera body to which one of the camera heads is attached.

The camera system according to the present invention includes several types of camera heads 1a to na, as shown in Fig. 1. The camera system has a configuration in which any one type of the camera head 1a among the several types of camera heads 1a to na is changeably attached to the camera body 1b.

In the following descriptions, it is assumed that the camera head 1a which has been selected out of the camera heads 1a to na is intended to be attached to the camera body 1b.

Figs. 2(a) and 2(b) are diagrams showing an appearance of the camera body shown in Fig. 1 and an appearance of the camera head 1a which is one of the camera heads shown in Fig. 1.

Fig. 2(a) shows the appearance of the camera body 1b, and Fig. 2(b) shows a condition in which the camera head 1a is intended to be changeably attached to the camera body 1b.

The camera body 1b as shown in Fig. 2(a) includes fitness determining means for determining whether or not one of the various types of camera heads as shown in Fig. 1 which is intended to be attached to the camera body 1b is fit for the camera body on the basis of information concerning the type which is wirelessly transmitted from the camera head. A mount cover 15b is provided to a mount section 10b of the camera body 1b. When the fitness determining means determines that the camera head which is intended to be attached to the camera body 1b is fit for the camera body 1b, the mount cover 15b is put into an "open" state, and accordingly the attachment of the camera head is accepted. On the other hand, when it is determined that the camera head is not fit for the camera body 1b, the mount cover is put into a "closed" state, and accordingly the attachment of the camera head is rejected.

Fig. 2(b) shows a condition in which the camera head 1a is about to be attached to the camera body while the mount cover 15b is being put in the "open" state after a fitness determining section in the camera body 1b determines that the camera head 1a, which has been intended to be attached to the camera body, is fit for the camera body 1b.

Here, descriptions will be provided for the camera body 1b with reference to Figs. 2(a) and 2(b).

As shown in Fig. 2(b), the centre of the camera body 1b is provided with the mount section 10b having many mount contacts which causes the camera head 1a to be attached to a correct position. This mount section is provided with the mount cover 15b for the purpose of covering the mount section, as shown in Fig. 2(a). When the fitness determining section determines that the camera head 1a is fit for the camera body 1b, the mount cover 15b is put in the "open" state, as shown in Fig. 2(b).

Once the mount cover 15b is held in the "open" state as shown in Fig. 2(b), the camera head 1a is caused to come closer to the camera body 1b along a chain line in the figure in order that positions of the mount contacts of the mount section and the counterparts of the camera head may coincide with each other. When the camera head 1a is brought into contact with the camera body 1b, the camera head 1a is attached to the camera body 1b. Once the camera head 1a is attached to the camera body 1b in this manner, the multiple mount contacts of the mount section and the counterparts of the camera head are connected with each other, and accordingly the camera head 1a and the camera body 1b are electrically connected with each other.

In the case of this embodiment, a battery is disposed in the camera body 1b. The power is supplied from the battery through power contacts among the multiple mount contacts provided in the camera head 1a and the camera body 1b. Once the power of the battery in the camera body 1b is supplied to the camera head 1a through the power contacts, each of the camera head 1a and the camera body 1b is put into an "operating" state.

When this camera system is being put in the "operating" state in this manner, and a mode dial 14b is being set in a photographing mode, operation of a release button causes a photograph to be taken. In addition, while the mode dial 14b is being set in a playback mode, a picture is played back and displayed. Although not illustrated, an LCD panel, a menu key, a cross key and the like are disposed on the back of the camera body 1b. On the LCD panel, a through picture is displayed while the mode dial is being set in the photographing mode, and a played-back picture is displayed while the mode dial is being set in the playback mode. Through the menu key, the menu is instructed to be displayed. With the cross key, an operation is selected from the menu.

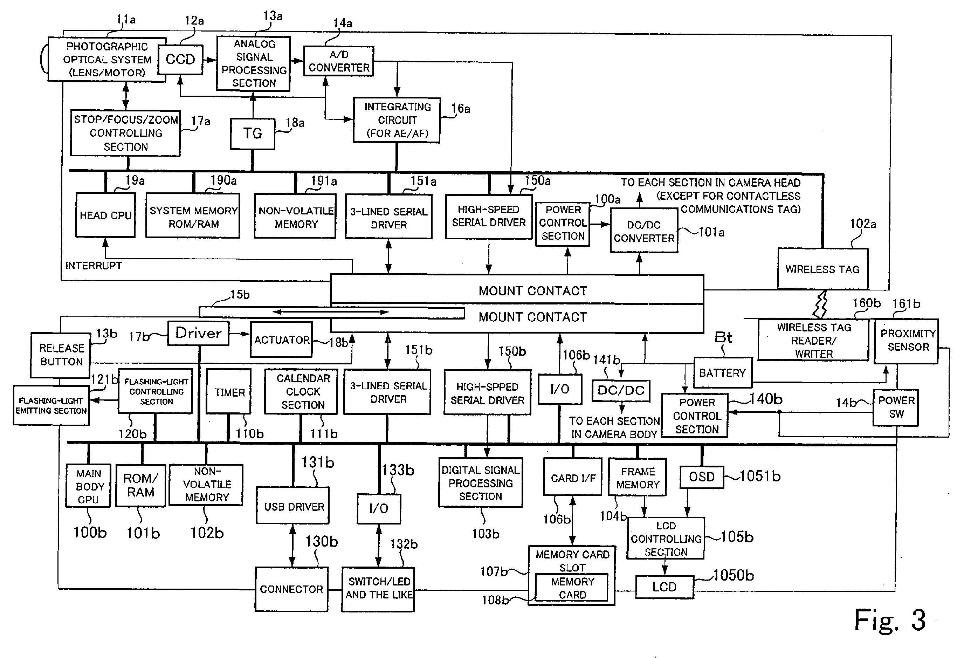

Here, with reference to Fig. 3, descriptions will be provided for how the mount cover 15b, which has been put in the "closed" state as shown in Fig. 2(a), is put into the "open" state when the camera head 1a is caused to come closer to the camera body 1b for the purpose of attaching the camera head to the camera body.

Fig. 3 is a block diagram showing a relationship among what is termed as "contactless near-field transmission section" in the present invention, what is termed as "contactless near-field reception section" in the present invention, and a main body CPU which is what is termed as "opening-and-closing control section" and also termed as "fitness determining section" in the present invention. The contactless near-field transmission section is disposed in the camera head 1a. The contactless near-field reception section is disposed in the camera body. The upper half of Fig. 3 shows a configuration of the camera head 1a, and the lower half of Fig. 3 shows a configuration of the camera body 1b.

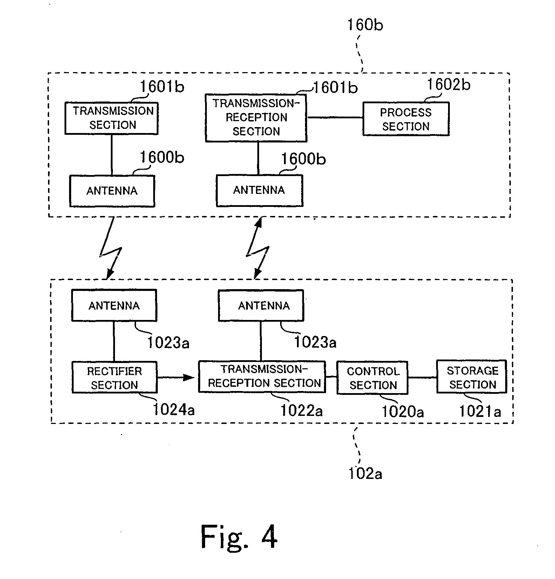

In addition, Fig. 4 is a diagram showing internal configurations respectively of a wireless tag 102a and a wireless tag reader-writer 160b. The wireless tag is disposed in the camera head according to this embodiment, and is an example of the contactless near-field transmission section. The wireless tag reader-writer is disposed in the camera body according to this embodiment, and is an example of the contactless near-field reception section.

First of all, descriptions will be provided for how it is determined whether or not the camera head 1a is fit for the camera body 1b on the basis of information concerning the type wirelessly transmitted from the camera head 1a when the camera head 1a is caused to come closer to the camera body 1b, with reference to Figs. 3 and 4.

As shown in Fig. 3, the camera head 1a includes the contactless near-field transmission section, for example, the wireless tag 102a in this case. The contactless near-field transmission section, which is the wireless tag 102a in this case, stores beforehand the information concerning the type through which the type of the camera head 1a is identified, and wirelessly transmits the data. When the camera head 1a is caused to come closer to the camera body 1b for the purpose of attaching the camera head 1a to the camera body 1b, the information concerning the type of the camera head to be transmitted from the wireless tag 102a to the camera body 1b is designed to be received by the wireless tag reader-writer 160b in the camera body 1b. This design makes it possible to determine whether or not the camera head 1a, which is intended to be attached to the camera body 1b, is fit for the camera body 1b while the camera head 1a and the camera body 1b are not in contact with each other yet.

As commonly known, the wireless tag 102a is designed to operate by receiving power which is supplied from the wireless tag reader-writer 160b. For this reason, if the power continues to be supplied from the wireless tag reader-writer 160b to the wireless tag 102a, the information concerning the type being transmitted from the camera head 1a will be continuously received by the wireless tag reader-writer 160b. However, this leads to wasteful consumption of the power. With this taken into consideration, the camera body in this embodiment is provided with a proximity sensor 161b, which consumes less power. Thus, only the proximity sensor 161b is constantly being put in an "on" state. Accordingly, when the proximity sensor 161b detects that the camera head 1a has come closer to the camera body 1b, the power control section 140b receives the result of the detection. Thereby, the power is supplied from the battery Bt to the wireless tag reader-writer 160b. In addition, the power is supplied from the reader-writer to the wireless tag 102a by use of high-frequency signals. This configuration allows the power consumption to be reduced.

Here, brief description will be provided for the internal configurations respectively of the wireless tag 102a and the wireless tag reader-writer 160b with reference to Fig. 4. For an explanatory convenience, Fig. 4 shows a power system and a communication system as if they were mutually independent. However, a transmission section 1601b and antennae 1600b and 1023b in the power system are commonly used by the power system and the communication system, and accordingly the seeming two systems are actually configured of one integrated system.

A transmission-reception section 1022a, a control section 1020a and a storage section 1021a are disposed in the wireless tag 102a as shown in Fig. 4. ID information is stored, as information concerning a type, in the storage section 1021a. When the power is supplied to the wireless tag 102a from the wireless tag reader-writer 160b as shown in Fig. 4, the information concerning the type which has been stored in the storage section 1021a in the wireless tag 102a is transmitted to the camera body 1b through the antenna 123a from the transmission-reception section 1022a under control of the control section 1020a. When the information concerning the type is transmitted to the camera body 1b, the ID information is received by the wireless tag reader-writer 160b.

After the ID information is received by the wireless tag reader-writer 160b in this matter, the ID information is read into a register in the main body CPU 100b under control of the main body CPU 100b.

Returning to Fig. 3, description will be provided for a relationship between the wireless tag reader-writer 160b and the main body CPU 100b.

The ID information to be received by the wireless tag reader-writer 160b is taken into a processing section 1602b (see Fig. 4) in the wireless tag reader-writer 160b under control of the main body CPU 100b. In addition, the ID information is taken into the register in the main body CPU 100b through a bus. Thereafter, the main body CPU 100b compares the ID information to be taken into the register with the information list concerning the types of the attachable camera heads, which is expanded in a RAM 101b, on the basis of a program which has been stored in a non-volatile memory 102b. Accordingly, the main body CPU 100b determines whether or not the ID information which has been taken thereinto from the camera head 1a agrees with the type of the camera head 1a which is fit for the camera body 1b. When, as a result of this determination, if it is judged that the ID information agrees with the type of the camera head which is fit for the camera body, the main body CPU 100b instructs a driver 17b to drive the actuator 18b, and the mount cover 15b, which has remained closed, is put into the "open" state. If the ID information is not the type of the camera head which is fit for the camera body 1b, the mount cover 15b continues to be put in the "closed" state, and thereby the attachment of the camera head 1a is rejected.

This main body CPU 100b corresponds to the "opening-and-closing control section", and a combination of the driver 17b and the actuator 18b corresponds to the "opening-and-closing drive section" of the mount cover 15b according to the present invention.

In this manner, when the camera head 1a is about to be attached to the camera body 1b, the main body CPU 100b, which is the fitness determination section, determines whether or not the camera head 1a is fit for the camera body 1b. Accordingly, the main body CPU 100b, which is also the opening-and-closing control section, controls whether the mount cover 15b should be put into the "open" state or into the "closed" state.

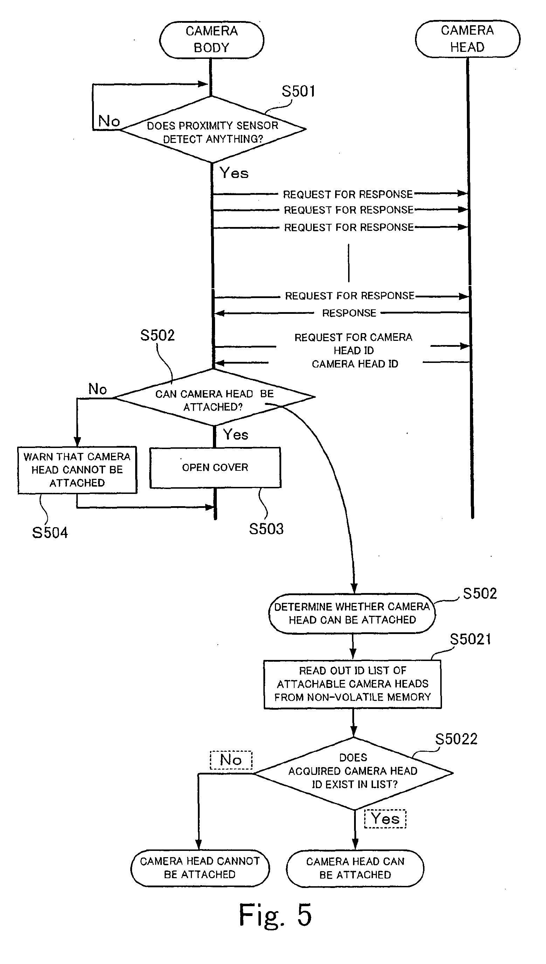

Fig. 5 is a diagram describing process which the main body CPU 100b performs when the camera head 1a is about to be attached to the camera body.

The main body CPU 100b causes the wireless tag reader-writer 160b to transmit a command to the wireless tag 102a in the camera head 1a, and causes the wireless tag reader-writer 160b to receive signals which are sent back from the camera head 1a in response to the command. For this reason, the camera body 1b is shown in the left half of Fig. 5, and the camera head 1a is shown in the right half of the same figure, for the purpose of illustrating directions in which exchanges between the wireless tag 102a and the wireless tag reader-writer 160b are carried out.

In step S501, when the main body CPU 100b detects, by means of the proximity sensor 161b, that the camera head has come closer to the camera body, the main body CPU 100b transmits an instruction to the wireless tag reader-writer 160b through the bus. Thus, the main body CPU 100b causes the wireless tag reader-writer 160b to continuously transmit to the camera head 1a high-frequency signals representing a request for a response. The continued supply of the high-frequency signals in this manner makes the wireless tag 102a in the camera head 1a receive the power supply. Then, the response signals are sent back from the camera head 1a. The main body CPU causes the wireless tag reader-writer 160b to receive the response signals thus sent back. Upon reception of the response signals, the main body CPU causes the wireless tag reader-writer 160b to transmit a request for the ID information of the camera head to be sent back. Then, if the ID information is sent back from the camera head 1a in a response to the request, the main body CPU 160b causes the wireless tag reader-writer 106b to receive the ID information. Subsequently, the main body CPU takes the ID information, which has been thus received, into the register through the bus, and determines whether or not the camera head which is about to be attached to the camera body is attachable in step S502. In this respect, if it is judged that the camera head is attachable, the process proceeds to "YES". In step S503, the main body CPU puts the mount cover 15b into the "open" state. If it is judged that the camera head is not attachable, the process proceeds to "NO". In step S504, the main body CPU leaves the mount cover 15b in the "closed" state for the purpose of warning that the camera head is not attachable, and thereafter this flow of the processes is completed.

Here, descriptions will be provided for processes which are performed in the determination step S502 illustrated in the lower part of Fig. 5.

When the main body CPU 100b is going to determine whether or not the camera head 1a which is about to be attached to the camera body 1b is fit for the camera body 1b in step S502, the main body CPU 100b reads out the list of the ID information concerning the attachable camera heads which has been stored beforehand in the non-volatile memory 102b, and makes the list expanded in the RAM 101b. Subsequently, in the ensuing step S5022, the main body CPU makes reference to the list which has been expanded in the RAM 101b, and thereby determines whether or not there exists the ID information, which has been received through the wireless tag reader-writer 160b, in the list. In step S5022, if it is judged that the ID information, which has been read out by the wireless tag reader-writer, and which indicates the type of the camera head which is about to be attached to the camera body, exists in the list, the process proceeds to "YES". Then, the processes in this flow end with the judgment that the camera head is attachable. Otherwise, if it is judged, in step S5022, that the camera head is not attachable, the process proceeds to "NO". Then, the processes in this flow end with the judgment that the camera head is not attachable.

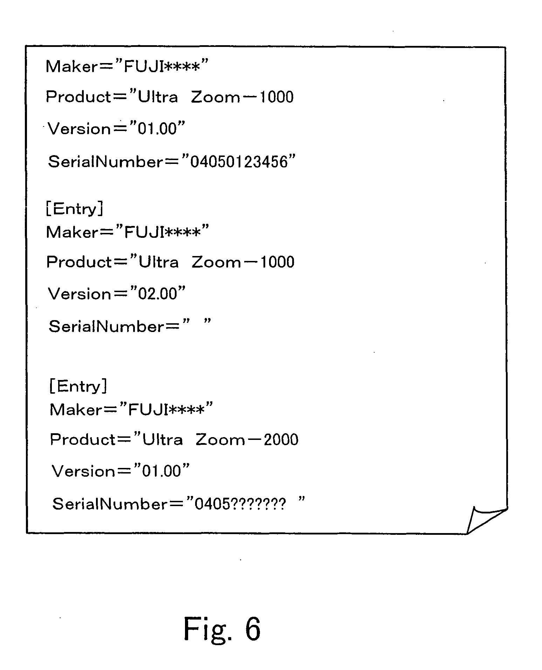

Fig. 6 is a diagram showing an example of the ID information.

Fig. 6 shows three types of the ID information.

If, as shown in Fig. 6, Maker, Product, Version, SerialNumber and the like are used as ID information specific to each camera head, the main body CPU 100b, which is the fitness determination section, determines, on the basis of information concerning the type associated with the ID information, whether or not the camera head with the information concerning the type is fit for the camera body 1b.

In this manner, it is determined, by the main body CPU 100b, whether or not the camera head is attachable. If it is judged that the camera head is attachable, the main body CPU instructs the driver 17b to put the mount cover 15b into the "open" state. If it is judged that the camera head is not attachable, the main body CPU transmits no instruction to the driver 17b, and leaves the mount cover 15b in the "closed" state. Thus, the attachment of the camera head 1a is rejected.

If the operations are carried out in this manner, a camera head which is not fit for the camera body is not attached thereto, and the camera system is configured which is capable of taking a picture in an appropriate manner.

Now, returning to Fig. 3, descriptions will be provided for a photographing process to be carried out by the camera system 1 when the camera system 1 is in condition in which the camera system is enabled to take a picture.

First of all, descriptions will be provided for the configuration of parts of the camera head 1a, which are related to the photographing process.

As shown in Fig. 3, the camera head 1a constituting this camera system 1 includes a photographic optical system 11a and an image pickup element (hereinafter, referred to as a "CCD" because a CCD solid image-pickup element is used in this case) 12a. A photographing lens, a stop and the like are disposed in the photographic optical system 11a. An image of an object is formed on the CCD 12a by means of the photographing lens in the photographic optical system 11a, and thus image data is generated in the CCD 12a. The image data generated in the CCD 12a is outputted to an analog signal processing section 13a, and accordingly a noise reduction process and the like are performed in the analog signal processing section 13a. Thereafter, an A/D converter 14a which follows the analog signal processing section 13a converts the image signals in the form of analog signals into the image signals in the form of digital signals. Subsequently, the image signals thus converted are supplied to a high-speed serial driver 150a. The image signals thus converted in the form of digital signals are transmitted to the camera body 1b by use of a high-speed serial bus to be driven by the high-speed serial driver 150a. It is a matter of course that the high-speed serial driver 150b to drive the high-speed serial bus is disposed in the camera body 1b in addition to being disposed in the camera head. The high-speed serial bus is driven by the two high-speed serial drivers. The image signals to be supplied to the camera body 1b through this high-speed serial bus includes the following three types of image signals. First are image signals for a through image (hereinafter referred to as "through image signals") for displaying on the LCD panel (not shown) an object which the photographing lens in the photographic optical system takes while any one of the photographing modes is being selected through the mode dial 14b. Second are image signals representing a static image (hereinafter referred to as "static image signals") which is obtained through an operation of the release button 13b while a static image photographing mode is being selected out of the photographing modes. Third are image signals representing a moving image (hereinafter referred to as "moving image signals") which is obtained through another operation of the release button 13b while a moving image photographing mode is being selected out of the photographing modes. Out of these three types of image signals, any one type of image signals are transmitted to the camera body 1b through the high-speed serial bus in response to a request from the camera body 1b.

On the other hand, the image signals which have been converted into the form of digital signals in the A/D converter 14a are supplied, also, to an integrating circuit 16a provided to a stage following the A/D converter 14a. The integrating circuit 16a performs an AF function (hereinafter referred to as an "AF") and an AE function (hereinafter referred to as an "AE"). Brightness of field for causing the AE function to be carried out and a distance to an object for causing the AF function to be carried out are measured by this integrating circuit 16a. The distance to an object and the brightness of field measured by the integrating circuit 16a are supplied to a stop/focus/zoom controlling section 17a through the data bus 192a. This stop/focus/zoom controlling section 17a adjusts a diameter of the stop in the photographic optical system, and adjusts a position of a focus lens in the photographing optical system. If the adjustments are carried out in this manner, the AF and the AE are carried out each time the lens in the photographing optical system included in the camera head 1a is directed to a different object. Accordingly, the focus and the brightness are adjusted quickly. Well-focused image data representing the object is thus generated in the CCD 12a, and then is outputted from the CCD 12a.

The CCD 12a, the analog signal processing section 13a, the A/D converter 14a and the integrating circuit 16a operate in synchronism with timing signals from a timing generator (hereinafter referred to as a "TG") 18a, and operations of the timing generator 18a are controlled by a head CPU 19a. This head CPU 19a controls the TG 18a, the stop/focus/zoom controlling section 17a and the like in accordance with procedures of programs which are stored in a system memory 190a. In the system memory 190a, stored are programs which indicate procedures for processes to be carried out respectively in the AE and the AE, procedures for processes to be carried out with regard to the communications in the serial bus as well as the like. Furthermore, in the system memory 190a, stored are a program for processing through images, and a program for processing static images, both of which are activated when the photographing mode is selected by use of the mode dial and additionally the static image photographing mode is selected. Moreover, in the system memory 190a, stored are a program for processing moving images which is activated when the moving image photographing mode is selected, and equivalent programs. In accordance with the procedures for the processes, the head CPU 19a controls all of operations of the integrating circuit 16a, operations of the TG 18a, read/write operations of the non-volatile memory 191a, operations of a 3-lined serial driver 151a, operations of the high-speed serial driver 150a, and the like.

The configuration of the camera head is as described above.

Next, descriptions will be provided for the camera body 1b.

Operations of the camera body 1b are comprehensively controlled by the main body CPU 100b. A system memory 101b in which programs are stored as well as a non-volatile memory 102b into which ID information concerning each of the camera heads of several types is written, and in which the ID information is stored in a non-volatile manner, are disposed in the camera body 1b. Incidentally, programs indicating procedures for main processes of the camera system are described in this system memory 101b. In addition, in the system memory 101b, described are procedures for processes to be carried out in coordination with the head CPU 19a in the camera head 1a, in a case where the through image signals are processed, in a case where the static image signals are processed, and in a case where the moving image signals are processed.

In accordance with the programs stored in the system memory 101b, the main body CPU 100b controls the transmission and reception of commands through the 3-lined serial bus, the reception of image signals through the high-speed serial bus, as well as the like. The 3-lined serial bus is driven by a 3-lined serial driver 151b, and the high-speed serial bus is driven by a high-speed serial driver 150b. The operations of the 3-line serial driver 151b and the operations of the high-speed serial driver 150b are controlled by the main body CPU 100b.

The serial bus is driven by the 3-lined serial driver 151a in the camera head 1a and the 3-lined serial driver 151b in the camera body 1b Thus, commands are transmitted and received therebetween. When a command representing a request for a through image to be transmitted is sent from the camera body 1b to the camera head 1a through the 3-lined serial bus, the head CPU 19a controls the TG 18a. Accordingly, through image signals are generated, and the through image signals thus generated are transmitted to the camera body 1b through the high-speed serial bus.

The through image signals to be transmitted to the camera body 1b through the high-speed serial bus are supplied to a digital signal processing section 103b, and predetermined processes are applied to the through image signals in this digital signal processing section 103b. Thereafter, the through image signals thus processed are stored in a frame memory 104b. YC signals to be stored in the frame memory 104b are supplied to an LCD controlling section 105b. The LCD controlling section 105b displays the through image on the panel of an LCD 1050b.

When the release button 13b is pressed while this through image is being viewed, interruption signals are supplied to both of the main body CPU 100b and the head CPU 19a, and thus the processing of the through image is suspended. The external interruption activates the programs for processing static images which has been described in the system memory. As shown in Fig. 3, when the release button 13b is pressed, release signals are inputted directly into an external interruption inputting pin of each of the main body CPU 100b and the head CPU 19a. The head CPU 19a in the camera head 1a causes signals for starting an exposure to be supplied from the TG 18b to the CCD 12a with interruption timing which is observed when the release button 13a is pressed, thus causing the CCD 18a to start the exposure. Thereafter, the head CPU 19a causes signals indicating the completion of the exposure to be supplied from the TG18a to the CCD 12a, and thus causes the CCD 12a to output to the analog signal processing section 13a static image signals which are composed of all the pixel data. The static image signals which the analog signal processing section 13a is caused to output are supplied from the analog signal processing section 13a to the digital signal processing section 103b through the A/D converter 14a and the high-speed serial bus 150a. In addition, in the digital signal processing section 103b, the static image signals are compressed into the form of JPEG, and are turned into a file in the form of JPEG. Then, the JPEG file is stored into a memory card 108b, which is installed in a memory card slot 107b, through a card I/F 106b. In a case where the mode dial 14b is being set at the moving image photographing mode, an interruption is caused when the release button 13b is pressed. Thus, the program for processing moving images is activated. Accordingly, moving image signals are supplied to the digital signal processing section 103b through the high-speed serial bus at intervals of predetermined time. Thereafter, the moving image signals are compressed into the form of motion JPEG or MPEG, and thus are stored into the memory card 108b.

A timer 110b for a timer process, a calendar clock section 111b and the like are disposed in the camera body, although they not essential in the present invention. For example, if calendar data is supplied to the LCD controlling section 105b from the calendar clock section, a clock and a calendar along with an object are displayed on the panel of the LCD 1050b. In addition, the camera body 1b includes a USB connector 130b. If a personal computer or the like is connected to the camera body 1b through the USB connector 130b, a USB driver 131b drives the USB, and thus image signals are transferred to the personal computer. Furthermore, the camera body also has a configuration in which a flashing-light emitting system, a switch/LED 132b and the like are operated under control of the main body CUP 100b through an I/O 133b. The flashing-light emitting system is constituted of a flashing-light emitting section 121b, which emits flashing light from a flashing-light emitting window 12b as shown in Fig. 2, and a flashing-light emission controlling section 120b. The switch/LED 132b is disposed on the back of the camera body.

Here, descriptions will be provided for an internal configuration of the digital signal processing section 103b.

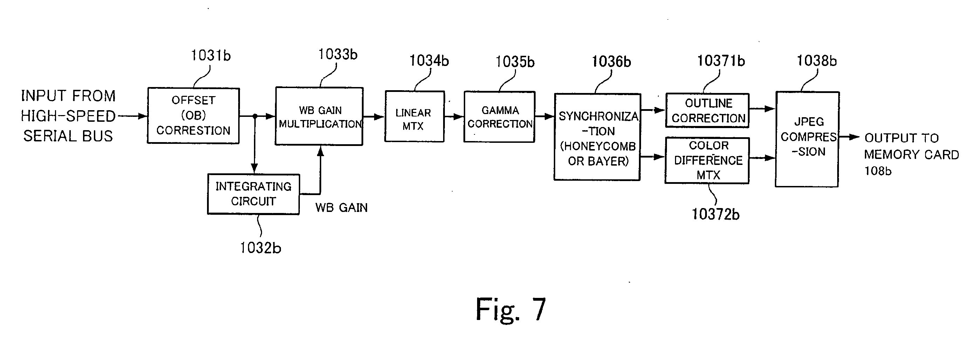

Fig. 7 is a diagram showing the internal configuration of the digital signal processing section as shown in Fig. 3.

If through image signals, static image signals or moving image signals are transmitted to this digital signal processing section 103b from the camera head through the high-speed serial bus after property information indicating properties of the camera head is set in the digital signal processing section 103b on the basis of ID information transmitted from the camera head, signal processing based on the property information is applied to the through image signals, the static image signals or the moving image signals.

Fig. 7 shows a process line in which processes are carried out until static image signals are recorded into the memory card 108b when the release button 13b is pressed. In a case where a through image is intended to be displayed on the panel of the LCD 1050b, a gamma correction section 1035b applies a gamma correction to the through image signals, and the through image signals thus gamma-corrected are supplied to the frame memory 104b at intervals of a predetermined time. Accordingly, an image based on the through image signals stored in the frame memory 104b is displayed, as the through image, on the LCD panel. Moreover, in a case where a moving image is intended to be recorded, a JPEG compression section 1038b applies a motion JPEG process or an MPEG process to the moving image signals.

Here, descriptions will be provided for processes to be applied to static image signals with reference to Fig. 7.

As shown in Fig. 7, the static image signals are supplied to the digital signal processing section 103b through the high-speed serial bus. First of all, an offset correction section 1031b at a first stage of the digital signal processing section 103b applies an offset correction to the static image signals. In the offset correction section 1031b, image signals in an OB area are defined as a reference level (black level), and thereby a process is carried out to clamp the image signals in areas other than the OB area to the reference level. This clamping process is equivalent to the offset process. The static image signals, to which the offset process has been applied, are supplied to a WB gain multiplication section 1033b at the ensuing stage. An adjustment of the white level relative to the black level, i.e. a white balance adjustment, is now applied to the static image signals in the WB gain multiplication section 1033b. This white light is generated through mixing Red light, Green light and Blue light by use of an additive colour mixing process. High-purity white light cannot be obtained unless gains respectively of R signals, G signals and B signals are adjusted in a way that output ratios among the R signals, the G signals and the B signals are made equal to one another. In this case, for the purpose of obtaining high-purity white light, a colour temperature corresponding to a type of a light source to be detected by an AWB sensor is set in the WB gain multiplication section 1033b. In addition, gains respectively of the R signals, the G signals and the B signals are set in the WB gain multiplication section 1033b so as to obtain high-purity white light depending on an integral value which is figured out by an integration to be done by the integrating circuit 1032b at a preceding stage. In the integrating circuit 1032b at the stage preceding the WB gain multiplication section 1033b, processes are carried out to detect a level of light acceptance in each of multiple R picture elements, for example, on the basis of information concerning the CFA and component orders, and to accordingly obtain a frequency distribution in each of the levels of light acceptance thus detected. In addition, processes are carried out to obtain a dispersion of the level of light acceptance on the basis of the frequency distribution, and to thus set, for example, a maximum level of light acceptance within a range defined by the dispersion, as a WB gain, in the WB gain multiplication section 1033b. If this integrating circuit 1032b were provided thereto, this makes it possible to obtain variation in the level of light acceptance among the multiple R picture elements, and to accordingly set an average value of the levels of light acceptance respectively of the multiple R picture elements, as the WB gain, in the WB gain multiplication section 1033b. In addition, the provision of the integrating circuit 1032b thereto makes it possible to set the maximum level of light acceptance, as the WB gain, in the WB gain multiple section.

Processes similar to those for the R picture elements are applied to G picture elements and B picture elements. Accordingly, the gains respectively of the R signals, the G signals and the B signals are set in the W/B gain multiplication section 1033b.

After the gains respectively of the R signals, the G signals and the B signals are adjusted in this manner, a linear MTX 1034b at the ensuing stage converts the RGB signals into YC signals. In this case, the RGB signals are multiplied, for example, by a colour conversion matrix of size 3x3, and thus are converted into Y signals, Cr signals and Cb signals. In a case where, for example, a contrast is intended to be increased, if the RGB signals are converted into the YC signals by assigning larger weight respectively to the diagonal elements out of the coefficients in the colour conversion matrix of size 3x3, the YC signals with the increased contrast are generated. Thereafter, a gamma correction is applied to the YC signals in the gamma correction section 1035b, and then the YC signals are synchronized in a synchronization section 1036b. Out of the YC signals, the Y signals are supplied to an outline correction section 10371b, and the C signals are supplied to a colour difference matrix 10372b. Subsequently, image signals composed of the Y signals and colour difference signals (R-Y, B-Y) are compressed in the JPEG compression section 1038b, and then are recorded, as an image file, into the memory card.

If a photo is taken by use of this camera system 1 after the camera head 1a which is fit for the camera body 1b is attached to the camera body 1b, a photographing process corresponding to the type of the camera head 1a is carried out adequately in the digital signal processing section in the camera body 1b. Thereby, the image signals are recorded into the memory card.

As described above, the camera system, the camera body and the camera head are realized, which prevent a camera head unfit for the camera body from being attached to the camera body, and which accordingly prevent an inadequate photographing from being performed.

The ID information is transmitted as the type information in the case of the embodiment as shown in Figs. 1 to 7. In some cases, however, no ID information exists in the list to be expanded in the RAM 101b. Taking such a case into consideration, it is advantageous that, in addition to the ID information, the property information indicating the properties of the camera head be transmitted from the camera head 1a. In this case, the type list of the camera head 1a does not have to be stored in the non-volatile memory 102b, unlike the case of the embodiment as shown in Figs. 1 to 7. Instead, it suffices if property criteria under which the signal processing section can perform signal processing are stored in the non-volatile memory 102b.

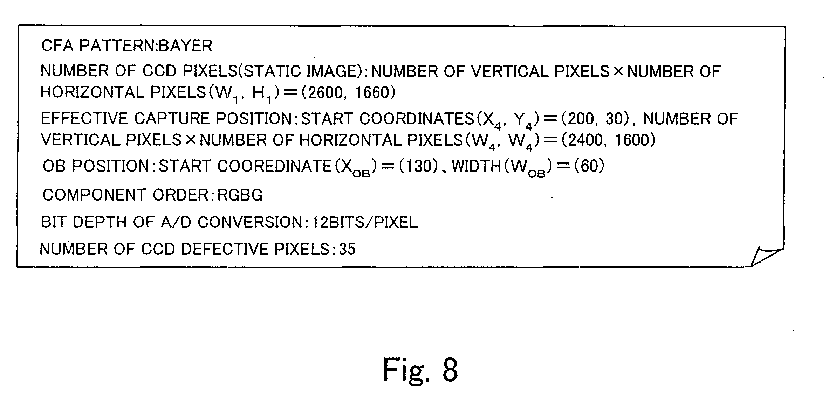

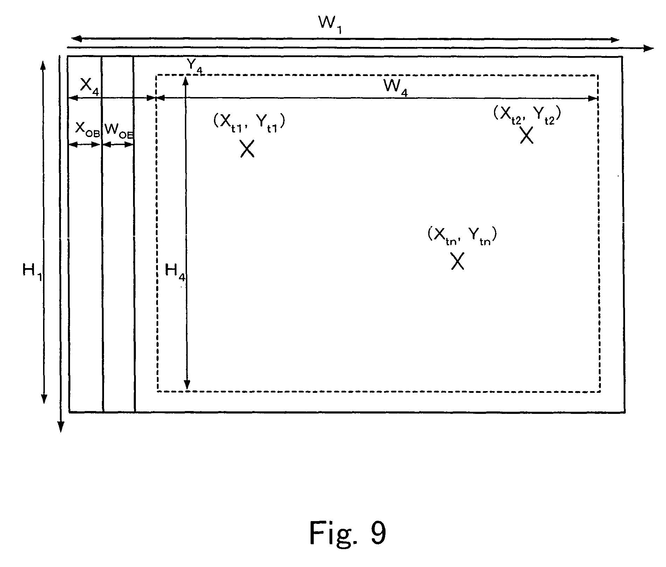

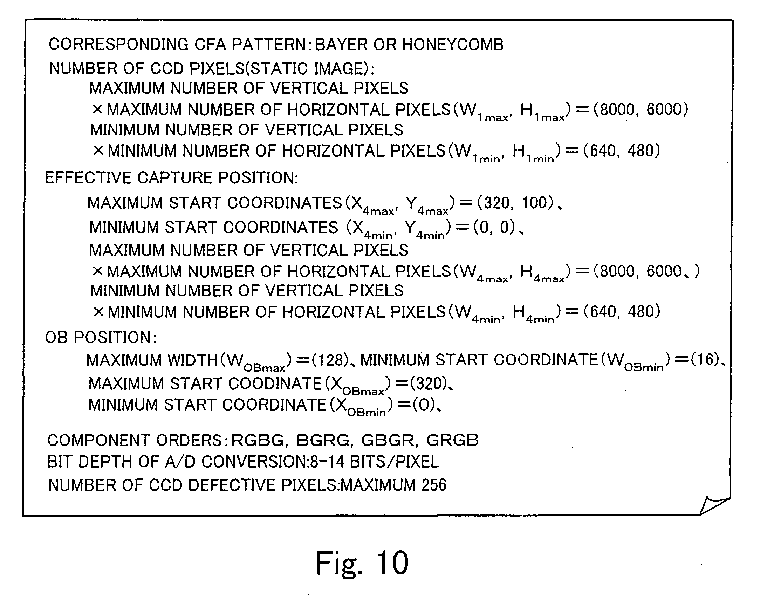

Fig. 8 is a diagram showing the property information. Fig. 9 is a diagram explaining symbols used in the property information. Fig. 10 is a diagram showing criteria based on the properties for determining whether or not signal processing can be performed in the digital signal processing section.

The property information illustrated in Fig. 8 shows a pattern of a colour filter array (hereinafter referred to as a "CFA") of the CCD 11a, the number of pixels in the CCD 11a (in the three cases of the static images, the through images and the moving images), coordinates representing an effective capture position and the number of pixels, coordinates representing a position of an optical black (hereinafter referred to as an "OB") which is a reference for the black level, the order of components, bit depth of the A/D conversion, and the number of defective pixels in the CCD in order from the top to the bottom.

Out of the property information shown in Fig. 8, the number of pixels is expressed by (W, H), which is a combination of the number W of vertical pixels and the number H of horizontal pixels. As shown in Fig. 9, (W, H) shows the number of pixels in the horizontal direction and the number of pixels in the vertical directions. Symbol W1 represents the maximum number of pixels in the width direction of an image pick-up plane, and symbol H1 represents the maximum number of pixels in the height direction of the image pick-up plane. In other words, in a case of (W1, H1), it is shown, as a piece of property information, that static image signals are generated in a way that all of the pixels which the CCD 12a has are used. Furthermore, it is shown, as another piece of property information, that through image signals are generated from the number of pixels (W2, H2) which is smaller than the number of pixels (W1, H1) of the static image signals, and that moving image signals are also generated from the number of pixels (W3, H3) which is smaller than the number of pixels (W2, H2) of the static image signals. Additionally, coordinates representing an effective capture position of each of the through image signals, the moving image signals and the like is expressed by (X, Y). The number of pixels in the effective capture area (an area illustrated by dashed lines in Fig. 9) is expressed by a combination (W4, H4).

In addition, an area, which is termed as the OB, is set in the image pick-up plane of the CCD 12b. The OB area is used for informing the digital signal processing section 103b in the camera body 1b of a black level which is observed when an image is picked up by use of this CCD 12b. A starting coordinate (XOB) and a length (WOB) of the OB area are shown respectively as other pieces of property information.

Furthermore, how many bits of data one pixel is made of is shown, as yet another piece of property information, in "A/D bit depth". The number of bits in each of the pixels is in a range of 8-bits to 14-bits. The number of bits is shown, as yet another piece of property information. In addition, a point (X, Y) in the system of coordinates of a defective pixel is shown, as further another piece of property information, depending on a damaged position of the CCD. Fig. 9 shows that defective pixels exist respectively in the three positions (Xt1, Yt1), (Xt2, Yt2) and (Xtn, Ytn). In a case where a defective pixel exists, an interpolation process is carried out by use of pixels next to the defective pixel.

If these pieces of property information satisfy the property criteria as shown in Fig. 10, this means that the camera head is one for which the digital signal processing section in the camera body can perform processing. In a case where the camera head has property information which satisfy the property criteria as shown in Fig. 10, the property information is set in the digital signal processing section 103b in the camera body 1b, and accordingly processes corresponding to the properties of the camera head 1a are applied to the image signals transmitted to the camera body through the high-speed serial bus.

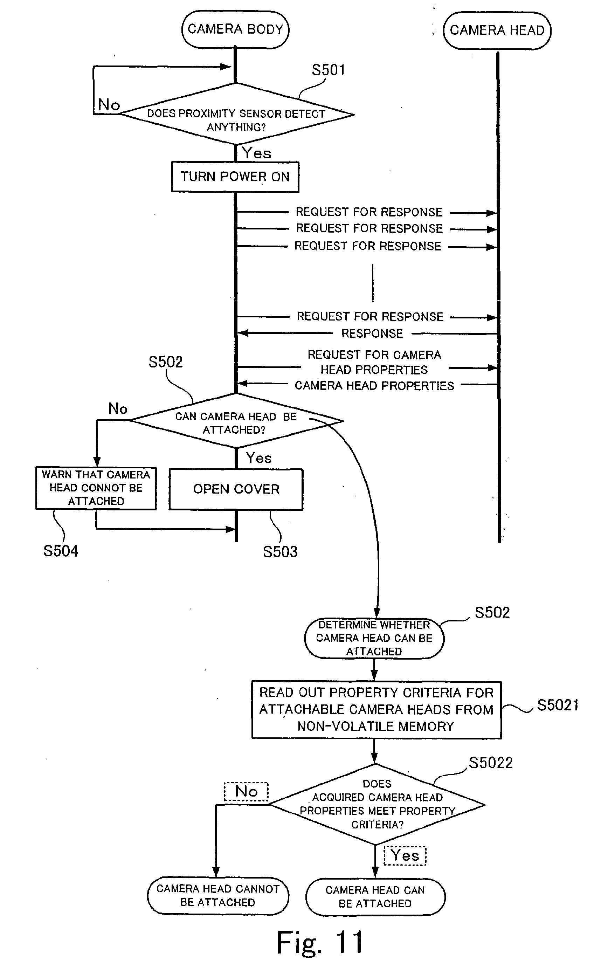

Descriptions will be provided for a flow of processes which are carried out in a case where the camera head 1a is caused to have the property information, with reference to Fig. 11.

Fig. 11 is a diagram explaining a procedure in which the main body CPU 100b controls the opening and the closing of the mount cover 15b.

The procedure which is described with reference to Fig. 11 is the same as the procedure which has been described with reference to Fig. 5, except that the property information is transmitted from the camera head 1a to the camera body.

If the property information is designed to be transmitted instead of the ID information in this manner, the list of the camera heads which can be attached to the camera body 1b does not have to be stored in the non-volatile memory. This brings about an advantage of reducing the capacity of the memory.

## Claims

1. A camera system (1) including a camera head (1a), which has a photographic optical system and an image pickup element, as well as a camera body (1b), which the camera head (1a) is attachable to and detachable from, and which thereby receives image signals from the attached camera head, thus processing the signals,
wherein the camera head (1a) comprises a contactless near-field transmission section (102a), which beforehand stores type information for identifying the type of the camera head, and which transmits the type information wirelessly, and
wherein the camera body (1b) comprises:
a mount section (10b), which the camera head (1a) may be attached onto, and which includes a mount cover (15b) and an opening-and-closing drive section (17b, 18b), the mount cover (15b) allowing the camera head (1a) to be attached to the camera body (1b) while the mount cover (15b) is in an "open" state, and making it unable for the camera head (1a) to be attached to the camera body (1b) while the mount cover (15b) is in a "closed" state, the opening-and-closing drive section (17b, 18b) opening and closing the mount cover (15b);
a contactless near-field reception section (160b) which receives the type information transmitted from the contactless near-field transmission section (102a);
a fitness determination section (100b) which determines whether or not the camera head (1a), whose type is identified by the type information received by the contactless near-field reception section (160b), is fit for the camera body (1b); and
an opening-and-closing control section (100b) which receives the judgment made by the fitness determination section (100b) that the camera head (1a) is fit for the camera body (1b) and which thereby instructs the opening-and-closing drive section (17b, 18b) to open the mount cover (15b).

2. A camera body (1b), which a camera head (1a) including a photographic optical system and an image pickup element is attachable to and detachable from, and which thereby receives image signals from the attached camera head (1a), thus processing the signals, the camera body comprising:
a mount section (10b), which the camera head (1a) is attached onto, and which includes a mount cover (15b) and an opening-and-closing drive section (17b, 18b), the mount cover (15b) allowing the camera head (1a) to be attached to the camera body (1b) while the mount cover (15b) is in an "open" state, and making it unable for the camera head (1a) to be attached to the camera body (1b) while the mount cover (15b) is in a "closed" state, the opening-and-closing drive section (17b, 18b) opening and closing the mount cover (15b);
a contactless near-field reception section (160b) which receives the type information transmitted from a contactless near-field transmission section (102a) of the camera head (1a);
a fitness determination section (100b) which determines whether or not the camera head (1a), whose type is identified by the type information received by the contactless near-field reception section (160b), is fit for the camera body (1b); and
an opening-and-closing control section (100b) which receives the judgment made by the fitness determination section (100b) that the camera head (1a) is fit for the camera body (1b), and which thereby instructs the opening-and-closing drive section (17b, 18b) to open the mount cover (15b).

3. The camera system according to claim 1, comprising:
a proximity sensor (161b) which constantly monitors whether or not the camera head (1a) comes closer to the camera body (1b); and
a power control section (140b) which turns power on in response to the proximity sensor's detection that the camera head (1a) has come closer to the camera body (1b),
wherein the contactless near-field reception section (160b) starts to operate when the power control section (140b) turns power on.

4. The camera system according to claim 1,
wherein the type information is ID information specific to the camera head (1a).

5. The camera system according to claim 1,
wherein the type information is property information representing properties of the camera head (1a).

6. The camera system according to claim 5,
wherein the property information includes any one of the number of bits of an A/D converter, information concerning an optical black, as well as the number of pixels, the pattern of the filter array, and the pixel array of the image pickup element.

7. A camera head (1a), which includes a photographic optical system and an image pickup element, and which is attachable to and detachable from a camera body (1b) to receive image signals and to thereby process the signals, and transmits the image signals to the camera body (1b) the camera head (1a) comprising
a contactless near-field transmission section (102a) which beforehand stores type information for identifying the type of the camera head (1a), and which transmits the type information wirelessly.
